Europäisches Patentamt

European Patent Office

Office européen des brevets

(19)

(11) Veröffentlichungsnummer: **0 023 952**
**B1**

(12) **EUROPÄISCHE PATENTSCHRIFT**

(45) Veröffentlichungstag der Patentschrift:
**27.12.84**

(51) Int. Cl.³: **H 02 G 7/12,** H 02 G 7/14

(21) Anmeldenummer: **80103114.7**

(22) Anmeldetag: **04.06.80**

(54) Schwingungsmindernder Feldabstandhalter für ein Zweier-Bündel und mit solchen Feldabstandhaltern versehenes Zweier-Bündel für eine Hochspannungs-Freileitung.

(30) Priorität: **13.08.79 DE 2932774**

(43) Veröffentlichungstag der Anmeldung:
**18.02.81 Patentblatt 81/7**

(45) Bekanntmachung des Hinweises auf die Patenterteilung:
**27.12.84 Patentblatt 84/52**

(84) Benannte Vertragsstaaten:
**AT BE CH FR GB IT LI LU NL SE**

(56) Entgegenhaltungen:
**CH - A - 403 901**
**FR - A - 2 412 187**
**US - A - 3 263 021**
**US - A - 3 904 811**

(73) Patentinhaber: **Karl Pfisterer Elektrotechnische Spezialartikel GmbH & Co. KG, Augsburger Strasse 375, D-7000 Stuttgart 60 (DE)**

(72) Erfinder: **Schlotz, Heinz, Rufstrasse 9, D-7300 Esslingen-Hegensberg (DE)**

(74) Vertreter: **Patentanwälte Phys. Bartels, Dipl.-Ing. Fink Dipl.-Ing. Held, Lange Strasse 51, D-7000 Stuttgart 1 (DE)**

## Beschreibung

Die Erfindung betrifft einen Feldabstandhalter für ein horizontales Zweier-Bündel mit zwei die beiden Leiter des Bündels in je einem Klemmkanal aufnehmenden Klemmen, die über je ein Distanzelement mit einem Massekörper verbunden sind, dessen Schwerpunkt unterhalb der durch die beiden Klemmkanäle definierten Ebene liegt. Ferner betrifft die Erfindung ein mit solchen Feldabstandhaltern versehenes, horizontales Zweier-Bündel.

Es sind schwingungsmindernde Feldabstandhalter bekannt, die symmetrisch zu der durch die Bündelachse gehenden Symmetrieebene ausgebildet sind. Da sie eine Kombination aus einem Schwingungsdämpfer und einem Schwingungstilger bilden, haben sie zumindest bei einer richtigen Abstimmung auf die Eigenfrequenzen der Leiter des Bündels gute Dämpfungseigenschaften. Dennoch bilden sich beispielsweise an horizontalen Zweier-Bündeln Schwingungszustände aus, bei welchen die Dämpfung dieser Feldabstandhalter nahezu unwirksam ist.

Eine symmetrische Ausbildung zu der durch die Bündelachse gehenden Symmetrieebene hat auch ein bekannter Feldabstandhalter der eingangs genannten Art (CH-A-403 901), der jedoch nicht der Minderung von Schwingungen der Leiter des Zweier-Bündels dient, sondern verhindern soll, dass bei ungleicher Last auf den einzelnen Leitern oder bei starkem Wind ein Überdrehen oder ein Überwerfen der Leiter auftritt. Er weist daher einen symmetrisch zu den beiden die Leiter umfassenden Klemmen unterhalb der durch die Kanäle definierten Ebene angeordneten Massekörper auf, der über zwei gleichlange Distanzstäbe starr mit den beiden Klemmen verbunden ist. Damit vergrössert dieser Feldabstandhalter nur die Masse, die beschleunigt werden muss, wenn auf die Leiter eine Kraft im Sinne eines Überdrehens oder Überwerfens einwirkt, und zwar für beide Leiter in gleicher Grösse. Eine Schwingungsdämpfung lässt sich hiermit nicht erreichen.

Ferner ist ein Feldabstandhalter für ein horizontales Zweier-Bündel bekannt (US-A-3 263 021), der eine Bewegung der Leiter des Bündels in ihrer Längsrichtung relativ zueinander ermöglichen soll. Er weist deshalb eine flexible Verbindung in Form einer Feder oder eines Gelenkes auf, welche das eine Ende von zwei gleichachsig angeordneten, in der durch die beiden Leiter definierten Ebene liegenden Distanzstäbe verbindet, die eine unterschiedliche Länge haben und an ihrem anderen Ende je eine der beiden Klemmen tragen, welche die Leiter des Bündels erfassen. Eine schwingungsmindernde Wirkung hat dieser Feldabstandhalter nicht.

Schliesslich ist es noch bekannt (US-A-3 904 811), zur Dämpfung von Schwingungen eines Leiters oder eines Leiterbündels einer Freileitung bei Eisbehang infolge Seitenwind seitlich neben der durch den Schwerpunkt des Leiters oder des Leiterbündels gehenden Linie einen Massekörper anzuordnen und diesen starr mit dem Leiter oder einem Feldabstandhalter zu verbinden, der seinerseits die Leiter zumindest bezüglich einer Drehbewegung um die durch den Schwerpunkt gehende Linie starr miteinander verbindet. Eine derartige Anordnung und starre Verbindung des Massekörpers mit den Leitern müsste deshalb auch bei einer nicht beschriebenen Ausführungsform für ein horizontales Zweier-Bündel vorgesehen werden. Damit kann dieser Feldabstandhalter aber nur in der Art eines Schwingungstilgers auftretende Schwingungen dämpfen, wobei eine Drehschwingung um eine parallel zu der durch den Schwerpunkt des Systems verlaufende Linie erfolgt. Die Dämpfungswirkung eines Schwingungstilgers ist aber auf denjenigen Frequenzbereich beschränkt, auf den er abgestimmt ist.

Der Erfindung liegt die Aufgabe zugrunde, einen schwingungsmindernden Feldabstandhalter für ein horizontales Zweier-Bündel zu schaffen, der über den gesamten Frequenzbereich Schwingungen unterdrückt oder doch wenigstens zufriedenstellend mindert. Diese Aufgabe löst ein Feldabstandhalter, der die Merkmale des Anspruches 1 aufweist.

Der Massekörper, der sich vorteilhafterweise möglichst nahe an der senkrechten Schwingungsebene des einen Leites befindet, wobei sein Schwerpunkt nicht nur zwischen den beiden Leitern des Bündels, sondern auch ausserhalb liegen kann, bedeutet für denjenigen Leiter, nahe dessen Schwingungsebene sich sein Schwerpunkt befindet, einen mit zunehmender Frequenz höheren Schwingwiderstand. Hierdurch bildet sich in der Nähe des Masseschwerpunktes ein Schwingungsknoten aus. Für den anderen Leiter bildet hingegen der Massekörper einen Festpunkt, von dem aus die Schwingungen dieses Leiters infolge der dabei auftretenden Drehbewegungen relativ zum Massekörper stark gedämpft werden, da hierbei die elastischen Dämpfungsglieder beansprucht und damit wirksam werden, und zwar unabhängig von der Schwingungsfrequenz.

Wie Langzeitmessungen unter natürlichen Betriebsbedingungen mit dem erfindungsgemässen Feldabstandhalter gezeigt haben, verhindert dieser auch das Auftreten von die Dämpfung beeinflussenden Drehschwingungen der Leiter um eine Achse parallel zur Bündelhauptachse. Bei den bekannten Feldabstandhaltern mit symmetrischer Massenanordnung treten neben den gleichphasigen Schwingungen der beiden Leiter auch mehr oder weniger ausgeprägte ungleichphasige Schwingungen auf. Die Folge letzterer sind Drehschwingungen des Feldabstandhalters um eine fiktive Achse parallel zur Bündelhauptachse. Das vorwiegend selbststeuernde Schwingungssystem aus Seilen und Abstandhaltern, welches seine Energie aus der Windanströmung erhält, sucht sich letztlich den Schwingungszustand mit dem geringsten Dämpfungswiderstand selbst aus, wobei naturgemäss phasengleiche Schwingungen zwischen den beiden Leitern nur ein Schwingungszustand unter vielen anderen, phasenungleichen Zuständen ist. Da der erfindungsgemässe Feldabstandhalter auch diese Schwingungen unterdrückt, wird mit ihm eine ausreichende Schwingungsminderung über den gesamten üblichen Frequenzbereich erreicht.

Bei einer bevorzugten Ausführungsform liegt der Schwerpunkt des Massekörpers im Bereich eines Gelenkkörpers, welcher die die Verbindung zu den Distanzelementen herstellenden elastischen Dämpfungsglieder enthält. Dabei ist der Massekörper vorzugsweise durch den Gelenkköper selbst oder eine an ihm befestigte, zusätzliche Masse gebildet.

Im Hinblick auf einen möglichst einfachen konstruktiven Aufbau des Feldabstandhalters besteht die zusätzliche Masse vorteilhafter Weise aus zwei den Gelenkköprer zwischen sich aufnehmenden Deckeln. Die Distanzelemente können durch Stäbe unterschiedlicher Länge gebildet sein. Solche Stäbe ergeben nicht nur eine einfache Konstruktion. Sie ermöglichen es auch in besonders einfacher Weise, die Lage des Schwerpunktes des Massekörpers an die Erfordernisse anzupassen.

Infolge der asymmetrischen Lage des Schwerpunktes des erfindungsgemässen Abstandhalters und seines Massekörpers bezüglich der beiden Leiter des Zweier-Bündels ist die Dämpfungswirkung jedes einzelnen Feldabstandhalters auf die beiden Leiter unterschiedlich. Vorzugsweise wird daher die Anordnung der Feldabstandhalter am Bündel so gewählt, dass im Wechsel auf einen Feldabstandhalter, bei dem der Schwerpunkt des Massekörpers nahe dem einen Leiter liegt, ein Feldabstandhalter folgt, bei dem der Schwerpunkt des Massekörpers nahe dem anderen Leiter liegt. Hierdurch erzielt man eine gleichmässige Dämpfung beider Leiter des Bündels, wobei von besonderem Vorteil ist, dass alle Feldabstandhalter gleich ausgebildet sein können und nur im Wechsel seitenverkehrt montiert zu werden brauchen, wie dies an sich bei einem Feldabstandhalter für ein Vierer-Bündel bekannt ist (US-A-3 904 811), bei dem ein Massekörper in der Mitte zwischen dem einen vertikalen Zweier-Bündel angeordnet ist.

Im Falle sehr niederfrequenter Schwingungen mit Halbwellenlängen grösser als etwa 10 m ist der Schwingwiderstand, den die Massekörper der Feldabstandhalter bilden, noch relativ klein. Das bedeutet, dass der Massekörper in diesem Frequenzbereich den Schwingungsamplituden noch in gewissem Masse folgt. Wegen der wechselnden, unsymmetrischen Massenanordnung ist aber die Wellenfortpflanzungsgeschwindigkeit in den beiden Leitern über die Länge jeweils verschieden. Durch die über die Leiterlänge verteilten, von der resultierenden Gesamtgeschwindigkeit abweichenden Fortpflanzungsgeschwindigkeiten erfahren die Leiter längslaufende Schlingerbewegungen. Diese Schlingerbewegungen erzeugen Drehimpulse an den Massekörpern, was zu einer auf den Leiter mit dem grösseren Abstand vom Schwerpunkt des Massekörpers ausgeübten Querkraft und damit zu einer Querbewegung dieses Leiters führ, die von den Dämpfungsgliedern stark gedämpft wird. Daher erfahren auch die Schlingerbewegungen eine starke Dämpfung durch die erfindungsgemässen Feldabstandhalter.

Durch die vorstehend erwähnte, wechselweise Anordnung der Feldabstandhalter wird weiterhin zusammen mit den beiden Leitern die Wirkung einer wechselweise vorgespannten Torsionsfeder erreicht, wobei die Leiter als Spannband wirken.

Bei Schwingungen der Leiter ergeben sich dann zusätzliche Torsionsschwingungen, deren Frequenz von der Masse und der Federkonstante der gespannten Leiter bestimmt wird. Diese Torsionsschwingungen können in ihrer Freuqenz durch unterschiedliche Abstände zwischen den Abstandhaltern variiert werden. Durch diese unterschiedlichen Frequenzen und das Vorhandensein unterschiedlicher Wellenfortpflanzungsgeschwindigkeiten in den beiden Leitern werden dem Bündel bei langwelligen Schwingungen Störschwingungen überlagert, die teilweise in gleiche Richtung und teilweise quer hierzu wirken. Insbesondere über die Querkomponente dieser Schwingungen können die erfindungsgemässen Schwingungs-dämpfer stark dämpfend auf die Leiterschwingungen einwirken. Daher sind vorzugsweise die Feldabstandhalter in unterschiedlichen Abständen voneinander angeordnet.

Im folgenden ist die Erfindung anhand eines in der Zeichnung dargestellten Ausführungsbeispiels im einzelnen erläutert.

Es zeigen:

Fig. 1 eine Ansicht des Feldabstandhalters,

Fig. 2 eine perspektivisch dargestellte Ansicht eines Abschnittes eines mit Feldabstandhaltern gemäss Fig. 1 ausgerüsteten Zweier-Bündels.

Ein schwingungsdämpfender und -tilgender Feldabstandhalter für ein horizontales Zweier-Bündel einer Hochspannungs-Freileitung weist einen Gelenkkörper 1 auf, mit dem über je ein durch ein Gummigelenk gebildetes Dämpfungselement ein kurzer Distanzstab 2 und ein langer Distanzstab 3 so miteinander verbunden sind, dass diese beiden Distanzstäbe etwa einen rechten Winkel miteinander einschliessen, wenn sich der Feldabstandhalter in Ruhe befindet. Zur Bildung der Gummigelenke sind die beiden Distanzstäbe 2 und 3 an ihrem in den Gelenkkörper 1 eingreifenden Ende mit einem Klöppel 2′ bzw. 3′ versehen, der in einen Gummikörper 4 eingebettet ist. Die beiden gleich ausgebildeten, je ein Dämpfungsglied bildenden Gummikörper 4 liegen in je einer vom Gelenkkörper 1 gebildeten Pfanne.

Der Gelenkkörper 1 ist im Ausführungsbeispiel in der durch die beiden Distanzstäbe 2 und 3 definierten Ebene geteilt. Die beiden zu der Teilungsebene symmetrischen Teile sind je als Deckel 5 ausgebildet, die mit Ausnahme von Durchtrittsöffnungen für die beiden Distanzstäbe aneinander anliegen und durch Schrauben 6 zusammengehalten werden. Die beiden Deckel 5 bilden im Inneren die Pfannen für die Gummikörper 4. Die Masse der beiden Deckel 5 ist so gewählt, dass sich eine optimale Dämpfung bei Schwingungen der beiden Leiter 7 und 8 des horizontalen Zweier-Bündels erzielen lässt.

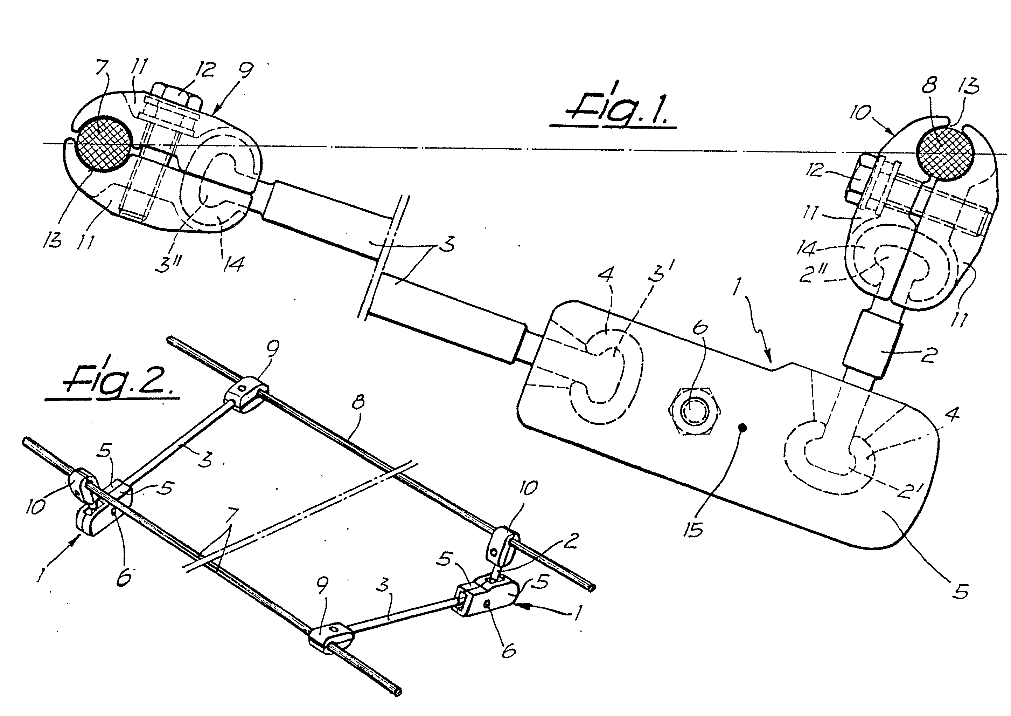

Die Leiter 7 und 8 werden mittels je einer Seilklemme 9 bzw. 10 erfasst, bei denen es sich, wie Fig. 1 zeigt, um zwei gleich ausgebildete Backenklemmen handelt, deren beide Backen 11 durch je eine Schraube 12 zusammengespannt werden. Der vom Gelenkkörper 1 wegweisende Teil der Seilklemme 9 und 10 bildet einen Klemmkanal 13 für die Leiter des Zweier-Bündels, wobei die Längsachse der Klemmkanäle lotrecht auf der durch die Distanzstäbe 3 und 4 definierten Ebene stehen. Der dem Gelenkkörper 1 zugekehrte Teil der beiden Seilklemmen 9 und 10 bildet eine Pfanne, in der ein Gummikörper 14 festgehalten wird, der wie der Gummikörper 4 ausgebildet ist. Der Gummikörper 14 nimmt seinerseits einen Klöppel 2″ bzw. 3″ auf, der an dem vom Gelenkkörper 1 wegweisenden Ende der Distanzstäbe 2 bzw. 3 vorgesehen und wie der Klöppel 2′ bzw. 3′ ausgebildet ist.

Wie Fig. 2 zeigt, werden die Feldabstandhalter so mit den beiden Leitern 7 und 8 des Zweier-Bündels verbunden, dass im Wechsel auf einen Feldabstandhalter, bei dem der Gelenkkörper 1 mit den einen Masseköper bildenden Deckeln 5 im wesentlichen unterhalb des einen Leiters hängt, ein Feldabstandhalter folgt, bei dem der Gelenkkörper 1 mit den Deckeln 5 im wesentlichen unterhalb des anderen Leiters angeordnet ist.

Da der Schwerpunkt des Gelenkkörpers 1 und damit der Schwerpunkt des Massekörpers ungefähr an der in Fig. 1 mit 15 gekennzeichneten Stelle der durch die beiden Deckel 5 definierten Teilungsebene liegt, ist sein Abstand zum Klemmkanal in der einen Klemme wesentlich kleiner als zum Klemmkanal der anderen Klemme. Die Abstände zwischen den aufeinanderfolgenden Feldabstandhaltern sind unterschiedlich.

**Patentansprüche**

1. Feldabstandhalter für ein horizontales Zweier-Bündel mit zwei die beiden Leiter (7, 8) des Bündels in je einem Klemmkanal (13) aufnehmenden Klemmen (9, 10), die über je ein Distanzelement (2, 3) mit einem Massekörper (1, 5, 6) verbunden sind, dessen Schwerpunkt (15) unterhalb der durch die beiden Klemmkanäle (13) definierten Ebene liegt, dadurch gekennzeichnet, dass der Abstand des Schwerpunktes (15) des der Schwingungsminderung dienenden Massekörpers (1, 5, 6) von der vertikalen Schwingungsebene des einen Leiters (7, 8) klein ist im Vergleich zum Abstand von der vertikalen Schwingungsebene des anderen Leiters (8, 7), und dass der Massekörper (1, 5, 6) über elastische Dämpfungsglieder (4) derart mit den Distanzelementen (2, 3) verbunden ist, dass der Leiter (7) auf der Seite des längeren Distanzelementes (3) gedämpfte Drehbewegungen relativ zum Massekörper (1, 5, 6) ausführen kann.

2. Feldabstandhalter nach Anspruch 1, gekennzeichnet durch einen die Dämpfungsglieder (4) enthaltenden Gelenkkörper (1, 5, 6) in dessen Bereich der Schwerpunkt (15) des Massekörpers (1, 5, 6) liegt.

3. Feldabstandhalter nach Anspruch 2, dadurch gekennzeichnet, dass der Massekörper (1, 5, 6) durch den Gelenkkörper (1, 5, 6) oder eine an diesem befestigte, zusätzliche Masse gebildet ist.

4. Feldabstandhalter nach Anspruch 3, dadurch gekennzeichnet, dass die zusätzliche Masse aus zwei den Gelenkkörper zwischen sich aufnehmenden Deckeln besteht.

5. Feldabstandhalter nach einem der Ansprüche 1 bis 4, dadurch gekennzeichnet, dass die Distanzelemente durch Stäbe (2, 3) unterschiedlicher Länge gebildet sind.

6. Horizontales Zweier-Bündel mit Feldabstandhaltern gemäss einem der Ansprüche 1 bis 5, dadurch gekennzeichnet, dass im Wechsel auf einen Feldabstandhalter, bei dem der Schwerpunkt des Massekörpers (1, 5, 6) nahe dem einen Leiter (7) liegt, ein Feldabstandhalter folgt, bei dem der Schwerpunkt des Massekörpers (1, 5, 6) nahe dem anderen Leiter (8) liegt.

7. Zweier-Bündel nach Anspruch 6, dadurch gekennzeichnet, dass zwischen den in Bündellängsrichtung im Abstand voneinander angeordneten Feldabstandhaltern unterschiedliche Abstände vorgesehen sind.

**Claims**

1. Field spacer for a horizontal two-conductor bundle having two clamps (9, 10) holding the two conductors (7, 8) of the bundle, each in a clamping channel (13), the two clamps being connected to a mass body (1, 5, 6), each by way of a spacer element (2, 3), the centre of gravity (15) of which mass body is situated below the plane defined by the two clamping channels (13), characterised in that the distance of the centre of gravity (15) of the mass body (1, 5, 6) serving to damp oscillations from the vertical plane of oscillation of one conductor (7, 8) is small compared to its distance from the vertical plane of oscillation of the other conductor (8, 7), and in that the mass body (1, 5, 6) is connected to the spacer elements (2, 3) by way of elastic damping members (4) in such a manner that the conductor (7) on the side of the longer spacer element (3) is capable of executing damped movements of rotation relative to the mass body (1, 5, 6).

2. Field spacer according to claim 1, characterised by a joint body (1, 5, 6) containing the damping members (4) and in the region of which the centre of gravity (15) of the mass body (1, 5, 6) is situated.

3. Field spacer according to claim 2, characterised in that the mass body (1, 5, 6) is formed by the joint body (1, 5, 6) or by an additional mass attached thereto.

4. Field spacer according to claim 3, characterised in that the additional mass consists of two lids receiving the joint body between them.

5. Field spacer according to one of the claims 1 to 4, characterised in that the spacer elements are formed by rods (2, 3) of differing lengths.

6. Horizontal two-conducto bundle with field spacers according to one of the claims 1 to 5, characterised in that a field spacer in which the centre of gravity of the mass body (1, 5, 6) is situated close to one conductor (7) alternates with a field spacer in which the centre of gravity of the mass body (1, 5, 6) is situated close to the other conductor (8).

7. Two-conductor bundle according to claim 6, characterised in that field spacers are arranged at different distances apart along the length of the bundle.

### Revendications

1. Entretoise de champ pour un faisceau double horizontal, avec deux pinces (9, 10) logeant chacune un des deux conducteurs (7, 8) du faisceau dans un canal de serrage (13) est reliées chacune par un élément d'écartement (2, 3) à un poids (1, 5, 6) dont le centre de gravité (15) se situe au-dessous du plan défini par les deux canaux de serrage (13), ladite entretoise étant caractérisé en ce que la distance du centre de gravité (15) du poids (1, 5, 6) réduisant les vibrations au plan vertical de vibration d'un conducteur (7, 8) est faible par rapport à la distance au plan vertical de vibration du second conducteur (8, 7); et le poids (1, 5, 6) est relié aux éléments d'écartement (2, 3) par des éléments d'amortissement élastiques (4), de façon que le conducteur (7) puisse effectuer, du côté de l'élément d'écartement (3) le plus long, des mouvements de torsion amorits par rapport au poids (1, 5, 6).

2. Entretoise de champ selon revendication 1, caractérisé par un joint articulé (1, 5, 6) contenant les éléments d'amortissement (4) et au voisinage duquel se trouve le centre de gravité (15) du poids (1, 5, 6).

3. Entretoise de champ selon revendication 2, caractérisé en ce que le poids (1, 5, 6) est constitué par le joint articulé (1, 5, 6) ou une masse supplémentaire fixée sur ce dernier.

4. Entretoise de champ selon revendication 3, caractérisé en ce que la masse supplémentaire est constituée par deux chapeaux entre lesquels est logé le joint articulé.

5. Entretoise de champ selon une quelconque des revendications 1 à 4, caractérisée en ce que les éléments d'écartement sont constitués par des barreaux (2, 3) de longueur différente.

6. Faisceau double horizontal avec des entretoises de champ selon une quelconque des revendications 1 à 5, caractérisé par l'alternance d'une entretoise de champ, dont le centre de gravité du poids (1, 5, 6) se trouve à proximité d'un conducteur (7), et d'une entretoise de champ, dont le centre de gravité du poids (1, 5, 6) se trouve à proximité du second conducteur (8).

7. Faisceau double selon revendication 6, caractérisé par des intervalles différents entre les entretoises de champ disposées suivant le sens longitudinal du faisceau.

*Fig.1.*

*Fig.2.*

7